# EUROPÄISCHE PATENTANMELDUNG

(11) **EP 1 203 845 A1**
(43) Veröffentlichungstag der Anmeldung: **08.05.2002**
(21) Anmeldenummer: 00811020.7
(22) Anmeldetag: 01.11.2000
(51) Int. Cl.: E04B 1/76

(54) **Verfahren zur Herstellung einer Dämmung**

(71) Anmelder: PAVATEX AG, CH-6330 Cham (CH)
(72) Erfinder: Lörcher, Karl, 8932 Mettmenstetten (CH); Knechtli, Thomas, 5035 Unterentfelden (CH)
(74) Vertreter: Blum, Rudolf Emil Ernst

(57) **Zusammenfassung**

Beschrieben wird ein Verfahren zur Herstellung einer Dämmung unter Verwendung eines losen Dämmstoffs, der aus gegebenenfalls behandelten Holzfasern besteht, wobei mindestens ein Teil der Holzfasern als Granulat vorliegt. Bevorzugt sind neben dem Granulat nichtgranulierte Holzfasern vorhanden, wobei sowohl die granulierten als auch die nicht-granulierten Holzfasern vorzugsweise lange Holzfasern enthalten, wie sie aus Nadelhölzern erhalten werden. Ein solcher Dämmstoff kann in die zu dämmenden Boden-, Wand- oder Dach-Hohlräume eingeblasen werden und ergibt bei einer Kompaktierung auf 30 bis 120 kg/m³ eine ausgezeichnete Dämmung.

## Beschreibung

Die vorliegende Erfindung betrifft ein Verfahren zur Herstellung einer Dämmung, insbesondere einer Wärmedämmung aber auch einer Schalldämmung, einen Dämmstoff, ein Verfahren zu dessen Herstellung und dessen Verwendung zur Herstellung einer Dämmung, sowie die Dämmung selbst. Insbesondere betrifft die vorliegende Erfindung ein Verfahren zur Herstellung einer Dämmung unter Verwendung eines losen Dämmstoffs, der Granulat aus Holzfasern umfasst.

### Hintergrund der Erfindung

Die Bereitstellung von Dämmungen, insbesondere beim Innenausbau von Wohnhäusern, z.B. bei der Wärmedämmung von Hauswänden bzw. Dächern, hat in den vergangenen 30 Jahren eine immer grössere Bedeutung erlangt. Den grössten Marktanteil haben Mineralfaserdämmstoffe bestehend aus Glas- und Steinfasern. Andere Dämmungsmaterialien enthalten bzw. bestehen aus synthetischen Stoffen, z.B. aus Polystyrol oder Polyurethanen, welche in Plattenform oder als Schaum in vorgesehene Zwischenräume eingebracht und mit Verdeckplatten versehen werden. Ökologisch interessanter sind jedoch Naturprodukte bzw. deren Derivate, wie beispielsweise Altpapier, welche bereits seit Jahren im Rahmen der Cellulosedämmung, in Form von Füllstoffen aus gepressten oder ungepressten Papierfetzen, zum Einsatz kommen.

In CH-480,940 wird ein Verfahren zur Herstellung eines Holzfaser-Granulats beschrieben, wobei die ursprünglichen Holzfasern in eine Suspension überführt und zusammen mit der Rotationsbewegung einer gepulsten Bewegung unterworfen werden, um so einen Fluss und einen Rückfluss der Suspension zu bewirken. Das Verfahren gemäss CH-480,940 erlaubt die Bereitstellung eines vergleichsweise kompakten, staubfreien Naturstoffs. Die Verwendung dieses in CH-480,940 beschriebenen Holzfaser-Granulats sowie von Holzfasern allgemein zu Dämmungszwekken bzw. als Füllmaterial wird seit Jahren insoweit praktiziert, als aus diesem Material unter Einsatz von Bindemitteln feste oder flexible Isolierplatten gepresst werden, die dann, ähnlich den Schaumstoffplatten, in die zu isolierenden Hohlräume eingebracht werden.

Die viel praktischere bzw. rationellere Vorgehensweise der Bereitstellung einer Isolierung bestünde aber im Einblasen des Naturstoff-Isoliermaterials in die Hohlräume. Diese Vorgehensweise ist aber in der Fachwelt bisher überhaupt nicht aufgegriffen worden.

Dies liegt einerseits daran, dass die auf dem Markt vertriebenen reinen Holzfasern zu einer exzessiven Staubbildung neigen, und infolge der inhärenten Eigenschaften der losen Holzfasern nicht hohlraumfrei eingebracht werden können, so dass lose Holzfasern im Endeffekt als Isoliermaterial von der Fachwelt grundsätzlich als ungeeignet angesehen werden.

Die aus CH-480,940 bereits grundsätzlich bekannten Holzfaser-Granulate sind zum einen noch nie im Rahmen der Einblastechnik zu Dämmungszwecke verwendet worden. Zum anderen zeigt sich aber auch, dass sich diese zwar im wesentlichen staubfrei einsetzen lassen, aber im Hinblick auf die gewünschte Dämmung nicht automatisch ein befriedigendes Ergebnis liefern. Dies hängt in erster Linie mit dem noch nicht gelösten Problem der für eine befriedigende Dämmung erforderlichen Einbringdichte für Holzfaser-Granulate zusammen.

Dies hat zur Konsequenz, dass die Fachwelt für Isoliervorhaben der Einblastechnik für Holzfasern wenig Beachtung geschenkt und vorzugsweise den Weg der Kompaktierung von Holzfasern zu Platten beschritten hat um so eine zufriedenstellende Isolierung zu erzielen.

Eine Aufgabe der vorliegenden Erfindung besteht folglich darin, Verfahren zur Herstellung einer Dämmung unter Verwendung eines losen Dämmstoffs auf der Basis von Holzfaser-Granulat bereitzustellen, mit welchem die oben genannten Nachteile zumindest teilweise vermieden werden, sowie eine entsprechend hergestellte Dämmung, einen Dämmstoff, der für die Durchführung des Verfahrens geeignet ist und ein Verfahren zur Herstellung eines solchen Dämmstoffes.

Es ist insbesondere eine Aufgabe der vorliegenden Erfindung ein rationelles, ökologisches und bauphysikalisch interessantes Verfahren zur Verarbeitung eines losen Dämmstoffs unter Ausbildung einer Isolierung (Dämmung) bereitzustellen, wobei - falls gewünscht - eine hohe Kompaktierung, unter Vermeidung einer unkontrollierten Hohlraumbildung und eines ungünstigen Setzungsverhaltens des Isoliermaterials, erreicht werden kann.

Diese Ziele werden erfindungsgemäss gemäss den unabhängigen Ansprüchen erreicht. Spezielle Ausführungsformen sind den abhängigen Ansprüchen zu entnehmen.

### Beschreibung der Erfindung

Völlig überraschend ist im Rahmen der vorliegenden Erfindung gefunden worden, dass bei der Verwendung eines losen Dämmstoffes auf der Basis von Holzfaser-Granulaten mittels eines Einblasverfahrens eine Dämmung bereitgestellt werden kann, wobei sich weder übermässige Probleme mit der Staubbildung der Fasern, noch Probleme mit der Einbringdichte und damit der Kompaktheit der Dämmung ergeben.

Beim erfindungsgemässen Verfahren wird der Dämmstoff in die Freiräume der zu isolierenden Boden-, Wand- oder Dachpartien (Hohlräume) effizient eingeblasen und dies - falls gewünscht - unter Erzielung eines hohen Kompaktheitsgrads. Durch dieses Verfahren resp. die Verwendung von Holzfaser-Granulat resp. erfindungsgemässer Dämmstoffe ist es nunmehr möglich, vergleichsweise rationell eine ökologisch und bezüglich ihrer bauphysikalischen Eigenschaften interessante Dämmung bereitzustellen, wobei - falls gewünscht - ein hoher Grad an Kompaktheit der eingeblasenen Dämmstoffe erreicht werden kann. Der Grad der Kompaktheit ist beispielsweise für den sommerlichen Hitzeschutz bzw. für die Schalldämmung und für ein günstiges Setzungsverhalten von herausragender Bedeutung.

Der erfindungsgemäss erreichbare hohe Kompaktheitsgrad lässt sich als Einbringdichte messen. Dabei wurde festgestellt, dass Isolierungs-Dichten von zwischen 30-120 kg/m³ erreicht werden. Solche Dichten ergeben eine ausgezeichnete Dichtung, Wärme- und Schalldämmung bzw. einen ausgezeichneten Hitzeschutz.

Ein weiterer Gegenstand der vorliegenden Erfindung ist ein loser Dämmstoff, der aus gegebenenfalls behandelten Holzfasern besteht, wobei ein Teil der Holzfasern als Granulat vorliegt, und wobei die granulierten und/oder die nicht-granulierten Holzfasern vorzugsweise lange Holzfasern enthalten oder daraus bestehen.

Als lange Holzfasern werden im Rahmen dieser Erfindung Holzfasern mit einer mittleren Länge von mehr als 2 mm, insbesondere von 2 bis 5 mm, bezeichnet. Solche Längen findet man beispielsweise bei Nadelhölzern, insbesondere Fichten. Dass solche langen Holzfasern eingesetzt werden können ist ein grosser Vorteil, da diese in wesentlich grösseren Mengen vorkommen als kurzfaserige Hölzer, wie Birken. Während kurze Fasern (mittlere Länge unter 2 mm) zu relativ weichem Granulat führen, das bei vollständiger Granulation der Holzfasern, z.B. nach dem in CH-480940 offenbarten Verfahren, für die Herstellung einer Dämmung bevorzugt ist, hat es sich nun ferner gezeigt, dass bei gleichzeitiger Anwesenheit von vorzugsweise ca. 2 bis 90 Gew.-% losen Fasern, speziell bevorzugt 2 bis 80 Gew.-%, die Verarbeitbarkeit, insbesondere die Kompaktierbarkeit, von Granulat aus langen Holzfasern gut ist und zu hervorragenden Dämmungen führt.

Als lose Fasern werden im Rahmen dieser Erfindung Fasern und Faserbündel resp. Faseragglomerate bezeichnet, wie sie aus der Zerfaserung resultieren. Solche Faserbündel und Faseragglomerate haben im Gegensatz zu den Granulaten keine im wesentlichen sphärische Struktur.

Bei den oben angegebenen Faseranteilen wird eine akzeptable Staubbelastung erreicht. Soll die Staubbelastung weiter erniedrigt werden, so kann es vorteilhaft sein neben Granulat aus Fasern langfasriger Hölzer auch oder ausschliesslich Granulat aus Fasern kurzfasriger Hölzer einzusetzen, wobei der Gehalt an losen Fasern mit steigendem Anteil an Granulat aus Fasern kurzfasriger Hölzer unter die oben angegebene Grenze von minimal 2 Gew.-% sinken und gar ganz entfallen, d.h. ca. 0 Gew.-% betragen kann. Die gleichzeitige Verwendung kurzer und langer Holzfasern zur Herstellung eines Granulats resp. eines granulathaltigen Dämmstoffs ist auch möglich aber nicht bevorzugt, da ein entsprechendes Produkt einen hohen Anteil loser Kurzfasern enthält.

Im Rahmen der vorliegenden Erfindung umfasst der Begriff "kurzfasrige Hölzer" neben kurzfasrigen Hölzern auch auf entsprechende Länge gekürzte langfasrige Hölzer. Wie bereits oben erwähnt wurde, haben solche kurzfasrige Hölzer vorzugsweise eine mittlere Länge von unter 2 mm. Die bevorzugte Verwendung von kurzfasrigen Holzfaser-Granulaten bei einem ausschliesslich aus Granulat bestehenden losen Dämmstoffs im Rahmen des nachfolgend beschriebenen erfindungsgemässen Einblasverfahrens wird darauf zurückgeführt, dass die langfasrigen Holzfaser-Granulate eine zu hohe Granulatsgrösse und insbesondere eine zu hohe Härte aufweisen, so dass ohne Zugabe von Fasern keine befriedigende Einbringdichte erzielt werden kann. Dagegen scheinen die kurzfasrigen Holzfaser-Granulate biegeweicher zu sein, so dass im Rahmen des Einblasverfahrens eine wesentlich höhere Einbringdichte erzielt wird als mit langfaserigen Granulaten alleine.

Alleine einsetzbare Holzfaser-Granulate (d.h. ohne gleichzeitige Anwesenheit loser Fasern) aus kurzen bzw. gekürzten Holzfasern können z.B. mittels des in CH-480,940 beschriebenen Verfahrens erhalten werden, mit der Massgabe, dass die Fasern eine mittlere Faserlänge von nicht mehr als 2 mm aufweisen.

Die erfindungsgemäss eingesetzten Granulate aus langen Holzfasern haben - abhängig vom Ausgangsmaterial - üblicherweise mittlere Durchmesser im Bereich von ca. 3 mm bis ca. 6 mm, wobei sich die Teilchengrösse als wenig kritisch herausgestellt hat.

Die Holzfasern, aus denen die erfindungsgemässen oder erfindungsgemäss einsetzbaren Dämmstoffe aufgebaut sind, können mit einem oder mehreren spezifischen Mitteln zur Verleihung spezieller Eigenschaften behandelt sein.

Durch Behandlung der Holzfasern mit z.B. einem hydrophobierenden Mittel werden dem Dämmstoff, und selbstverständlich auch der daraus hergestellten Dämmung, wasserabweisende Eigenschaften verliehen. Grundsätzlich kann das erfindungsgemäss verwendete Holzfaser-Granulat mit diversen Stoffen vorbehandelt werden. Weitere Stoffe, die zusammen mit einem hydrophobierenden Mittel oder alleine eingesetzt werden können sind beispielsweise Stoffen zur Erhöhung der Feuerresistenz und/oder der Pilzresistenz. Dabei haben sich Phosphorverbindungen, wie Ammoniumphosphate, insbesondere primäres und/oder sekundäres Ammoniumphosphat, als besonders geeignete Mittel zur Erhöhung der Feuerresistenz herausgestellt. Weitere geeignete Mittel zur Erhöhung der Feuerresistenz sind auch Borsäure und/oder Borsäuresalze, sowie Mischungen solcher Mittel zur Erhöhung der Feuerresistenz.

Die erfindungsgemässen Dämmstoffe enthalten üblicherweise 10 bis 98 Gew.-% Holzfaser-Granulat bezogen auf den gesamten Holzfasergehalt. Für die Wärmedämmung ist ein Gehalt von 20 bis 40 Gew.-% Granulat bevorzugt und für die Schalldämmung ein solcher von 50 bis 98 Gew.-% Granulat. Eine optimale Vereinigung beider Eigenschaften wird im Mengenbereich von 40 bis 50 Gew.-% Granulat erzielt.

Ein weiterer Gegenstand der vorliegenden Erfindung ist ein Verfahren zur Herstellung eines als Dämmstoff geeigneten losen Holzfaser-Produktes, das aus gegebenenfalls behandelten Holzfasern besteht, wobei zumindest ein Teil der Holzfasern in Form von Holzfaser-Granulat vorliegt. Dieses Verfahren ist dadurch gekennzeichnet, dass vorab Holzhäcksel mit Wasserdampf plastifiziert und anschliessend einer Zerfaserung unterzogen werden, wonach die Fasern in einem Granulator, beispielsweise einem Trommeltrockner, insbesondere ein Trommeltrockner, der an den Trommelwänden Scherkräfte auf den Inhalt ausüben kann, granuliert und anschliessend, oder bereits während der Granulierung beginnend, getrocknet werden.

Die Zerfaserung erfolgt vorzugsweise thermo-mechanisch und/oder chemisch-mechanisch, insbesondere thermo-mechanisch.

Der Granulator/Trockner, beispielsweise der Trommeltrockner, kann derart betrieben werden, dass er unterschiedliche Temperaturzonen aufweist, eingangseitig eine Zone tieferer Temperatur, insbesondere Umgebungstemperatur, und daran ausgangseitig anschliessend mindestens eine Zone höherer Temperatur.

Eine Behandlung der Holzfasern mit speziellen Mitteln, wie hydrophobierenden und/oder Brandschutz- und/oder Pilzschutzmitteln kann in der Zerfaserungsstufe und/oder in der Granulierungs/Trocknungsstufe, z.B. durch Einsprühen einer entsprechenden Lösung, stattfinden.

Der Granulator/Trockner, insbesondere der Trommeltrockner, kann von seiner Drehzahl und seinem Temperaturprofil her derart eingestellt werden, dass direkt das gewünschte Verhältnis von Granulat zu nicht-granulierten Holzfasern erhalten wird.

Es ist selbstverständlich auch möglich, den Dämmstoff durch Vermischen unterschiedlich granulathaltiger Produkte auf einen bestimmten Granulatgehalt einzustellen. Bei diesem Verfahren wird ein Granulat oder Granulat reiches Produkt hergestellt und gegebenenfalls mit getrennt hergestellten Fasern und/oder Granulat armem Produkt vermischt. Mit diesem Verfahren kann beispielsweise auch auf einfache Weise eine Mischung aus Granulat aus langen Fasern, Granulat aus kurzen Fasern und losen Fasern, insbesondere losen langen Fasern, erhalten werden.

Ein weiterer Gegenstand der vorliegenden Erfindung ist eine Dämmung, die aus den kompaktierten Dämmstoffen der vorliegenden Erfindung besteht, insbesondere eine Dämmung, die nach dem oben beschriebenen Verfahren erhältlich ist, nach dem ein Dämmstoff der vorliegenden Erfindung in die zu dämmenden Hohlräume, insbesondere Boden-, Wand- oder Dachpartien, eingeblasen wird. Eine solche Dämmung kann durch den Gehalt an Granulat auf Wärmedämmung oder Schalldämmung optimiert werden. Üblicherweise wird eine Bodendämmung resp. eine Wanddämmung zwischen Wohnbereichen zur Erzielung einer besseren Schalldämmung einen höheren Granulatgehalt (üblicherweise 50 -98 Gew.-%) aufweisen, eine Aussenwanddämmung einen geringeren Granulatgehalt (20 - 40 Gew.-%).

Die Erfindung wird nun in der Folge anhand einiger Beispiele weiter erläutert. Diese Beispiele dienen lediglich der Illustration der Erfindung, sollen diese aber in keiner Weise beschränken.

### Beispiel 1:

Herstellung eines Dämmstoffes aus langfasrigen Hölzern, Granulatanteil 30 Gew.-%.

Aus einem Zwischenlager (Silo) wurden Hackschnitzel aus Holz zur Plastifizierung in einen Vorwärmer gebracht. Die Bedingungen im Vorwärmerwaren: Dampfdruck 5 bar, Temperatur 150°C, Verweilzeit 3 Min. Die plastifizierten Holzschnitzel wurden anschliessend zur Zerfaserung in einen Defibrator verbracht, der betrieben wurde bei einem Dampfdruck von 5 bar, einer Temperatur von 150°C und bei einem Mahlscheibenabstand von 1-2 mm. Über eine Förderleitung gelangten die bei der Zerfaserung gebildeten Holzfasern (Trockengehalt ca. 50%) zur Granulierung und Trocknung in einen Trommeltrockner. In diesem Trommeltrockner (Röhrenbündeltrockner, Typ TH 214, Hersteller Ponndorf) wurden die Fasern während 10 Min., ohne Zuführung von Wärme, granuliert. Die Restwärme aus der Zerfaserung am Trocknereingang betrug ca. 80 - 100°C. Anschliessend an die Granulierung gelangten die granulathaltigen Holzfasern in eine erste Trocknungsstufe bei einer Temperatur von 180°C, an die sich eine zweite Trocknungsstufe von 120°C anschloss. Die gesamte Verweilzeit im Trommeltrockner betrug ca. 20 Min. Aus dem Trommeltrockner wurde der entsprechend gebildete Dämmstoff in ein Zwischenlager (Silo) gebracht.

### Beispiel 2:

Verwendung eines Dämmstoffes gemäss Beispiel 1 zur Herstellung einer Dämmung.

In diesem Beispiel wird eine Anwendung von Dämmstoffen als Wärmedämmung in einer Holzständerbauweise beschrieben. Die bauphysikalischen Berechnungen erfolgten aufgrund der in den Tabellen näher ausgeführten Konstruktionen. Die Materialien sind in den Tabellen schichtweise von innen nach aussen aufgelistet, wobei sich die Wärmedämmung und die Holzständerkonstruktion in der gleichen Schicht befinden. Die Breite der Wärmedämmung beträgt 565 mm und die des Holzständers 60 mm.

**Tabelle 1:**

| Dämmung hergestellt aus Dämmstoff gemäss Beispiel 1 | | | | |
|---|---|---|---|---|
| Material | Dicke [mm] | Dichte [kg/m³] | Wärmeleitfähigkeit [W/mK] | spezifische Wärmespeicherkapazität [J/kgK] |
| OSB | 15 | 700 | 0.130 | 2400 |
| Fichtenholzpfosten | 160 | 460 | 0.120 | 2400 |
| Wärmedämmung | 160 | 70 | 0.040 | 2700 |
| Hozfaserdämmplatte | 20 | 250 | 0.050 | 2700 |
| OSB = "Oriented Strand Board" | | | | |

**Tabelle 2:**

| Dämmung hergestellt aus Mineralfasern (Typ Isophen, erhältlich von Isover AG, CH-8155 Niederhasli | | | | |
|---|---|---|---|---|
| Material | Dicke [mm] | Dichte [kg/m³] | Wärmeleitfähigkeit [W/mK] | spezifische Wärmespeicherkapazität [J/kgK] |
| OSB | 15 | 700 | 0.130 | 2400 |
| Fichenholzpfosten | 160 | 460 | 0.120 | 2400 |
| Wärmedämmung | 160 | 17 | 0.040 | 600 |
| Holzfaserdämmplatte | 20 | 250 | 0.050 | 2700 |
| OSB = "Oriented Strand Board" | | | | |

Die Kennwerte entsprechender Dämmungen sind Tabelle 3 zu entnehmen.

**Tabelle 3:**

| Kennwerte einer erfindungsgemässen Dämmung und einer Dämmung des Stands der Technik | | |
|---|---|---|
| Kennwerte | Dämmstoff gem. Bsp. 1 | Dämmung aus Mineralfasern |
| U-Wert | 0.241 W/m²K | 0.241 W/m²K |
| Phasenverschiebung | 8.43 h | 2.7 h |
| Amplitudendämpfung | 76.3 | 48.9 |
| Schalldämmung | 48 dB | 45 dB |

## Patentansprüche

1. Verfahren zur Herstellung einer Dämmung, **dadurch gekennzeichnet, dass** ein Dämmstoff, der lose ist und aus gegebenenfalls behandelten Holzfasern besteht, wobei mindestens ein Teil der Holzfasern als Granulat vorliegt, in die zu dämmenden Boden-, Wand- oder Dach-Hohlräume eingeblasen wird.

2. Verfahren gemäss Anspruch 1, **dadurch gekennzeichnet, dass** das Granulat lange Holzfasern enthält oder daraus besteht.

3. Verfahren gemäss Anspruch 1 oder 2, **dadurch gekennzeichnet, dass** der Dämmstoff nicht-granulierte Holzfasern enthält.

4. Verfahren gemäss Anspruch 3, **dadurch gekennzeichnet, dass** die nicht-granulierten Holzfasern lange Holzfasern enthalten oder daraus bestehen.

5. Verfahren gemäss einem der vorangehenden Ansprüche, **dadurch gekennzeichnet, dass** die langen Holzfasern eine mittlere Länge von mehr als 2 mm aufweisen, insbesondere von 2 bis 5 mm.

6. Verfahren gemäss einem der vorangehenden Ansprüche, **dadurch gekennzeichnet, dass** die Holzfasern Fasern aus Nadelhölzern sind, insbesondere Fichte.

7. Verfahren gemäss einem der vorangehenden Ansprüche, **dadurch gekennzeichnet, dass** die Holzfasern mit einer hydrophobierenden Chemikalie und/oder mit einem Pilzmittel und/oder mit einem Brandschutzmittel, bevorzugt einem Ammoniumphosphat, insbesondere primärem und/oder sekundärem Ammoniumphosphat, behandelt sind.

8. Verfahren gemäss einem der vorangehenden Ansprüche, **dadurch gekennzeichnet, dass** er 10 bis 98 Gew.-% Granulat aus Holzfasern bezogen auf den gesamten Holzfasergehalt enthält.

9. Verfahren gemäss Anspruch 8, **dadurch gekennzeichnet, dass** er 20 bis 40 Gew.-% Granulat aus Holzfasern enthält.

10. Verfahren gemäss Anspruch 8, **dadurch gekennzeichnet, dass** er 50 bis 98 Gew.-% Granulat aus Holzfasern enthält.

11. Verfahren gemäss Anspruch 1, **dadurch gekennzeichnet, dass** der Dämmstoff aus Granulat aus Holzfasern einer mittleren Länge von weniger als 2 mm besteht.

12. Verfahren gemäss einem der vorangehenden Ansprüche, **dadurch gekennzeichnet, dass** der Dämmstoff in einer Dichte von zwischen 30-120 kg/m³ eingeblasen wird.

13. Verfahren zur Herstellung eines Dämmstoffs wie in einem der Ansprüche 1 bis 10 definiert, **dadurch gekennzeichnet, dass** Holzhäcksel mit Wasserdampf plastifiziert und anschliessend einer Zerfaserung unterzogen werden, wonach die Fasern in einem Granulator/ Trockner, insbesondere einem Trommeltrockner, der an den Trommelwänden Scherkräfte auf den Inhalt ausübt, granuliert und getrocknet werden.

14. Verfahren gemäss Anspruch 13, **dadurch gekennzeichnet, dass** die Zerfaserung thermo-mechanisch und/oder chemisch-mechanisch, insbesondere thermo-mechanisch, erfolgt.

15. Verfahren gemäss Anspruch 13 oder 14, **dadurch gekennzeichnet, dass** der Trommeltrockner unterschiedliche Temperaturzonen aufweist, eingangseitig eine Zone tieferer Temperatur, insbesondere Umgebungstemperatur, und daran ausgangseitig anschliessend mindestens eine Zone höherer Temperatur.

16. Verfahren gemäss einem der Ansprüche 13 bis 15, **dadurch gekennzeichnet, dass** in der Zerfaserungsstufe und/oder eingangs der Granulierungs/Trocknungsstufe eine Behandlung mit hydrophobierendem und/oder Brandschutzmittel stattfindet.

17. Verfahren gemäss einem der Ansprüche 13 bis 16, **dadurch gekennzeichnet, dass** der Trommeltrockner von seiner Drehzahl und seinem Temperaturprofil her derart eingestellt ist, dass direkt das gewünschte Verhältnis von Granulat zu nicht-granulierten Holzfasern erhalten wird.

18. Verfahren zur Herstellung eines Dämmstoffs wie in einem der Ansprüche 1 bis 10 definiert, **dadurch gekennzeichnet, dass** ein Granulat oder Granulat reiches Produkt hergestellt und gegebenenfalls mit getrennt hergestellten Fasern und/oder Granulat armem Produkt vermischt wird.

19. Dämmstoff, **dadurch gekennzeichnet, dass** er wie in einem der Ansprüche 1 bis 10 definiert ist.

20. Dämmung, **dadurch gekennzeichnet, dass** sie aus einem Dämmstoff wie in einem der Ansprüche 1 bis 11 definiert in verdichteter Form besteht.

21. Dämmung gemäss Anspruch 20, **dadurch gekennzeichnet, dass** sie eine Dichte von 30 bis 120 kg/m³ aufweist.

22. Dämmung nach Anspruch 20 oder 21, **dadurch gekennzeichnet, dass** sie eine Wärmedämmung oder Schalldämmung ist.

23. Verwendung eines Dämmstoffes wie in einem der Ansprüche 1 bis 11 definiert zur Herstellung einer Dämmung.

24. Verwendung eines Dämmstoffes wie in Anspruch 9 oder 11 definiert zur Herstellung einer Wärmedämmung.

25. Verwendung eines Dämmstoffes mit minimal 50 Gew.-% Holzfasergranulat, insbesondere eines Dämmstoffes wie in Anspruch 10 oder 11 definiert, zur Herstellung einer Schallisolation.
